# EUROPEAN PATENT APPLICATION

(11) **EP 1 998 243 A1**
(43) Date of publication of application: **03.12.2008**
(21) Application number: 07010520.0
(22) Date of filing: 25.05.2007
(51) Int. Cl.: G06F 3/033, G06F 3/042

(54) **Optoelectronic device and resilient member therefor**

(71) Applicant: 3Dconnexion Holding SA, 1122 Romanel-sur-Morges (CH)
(72) Inventor: Pascucci, Antonio, 82229 Seefeld (DE); Senft, Volker, 82229 Seefeld (DE); Wiest, Stefan, 82234 Wessling (DE); Dietrich, Johannes, 82205 Gilching (DE); Brandt, Benedict, 80335 München (DE); Lugmair, Stefan, 81245 München (DE)
(74) Representative: Schmidt, Steffen

(57) **Abstract**

The present invention relates to an optoelectronic device (100) for determining relative movements or relative positions of two objects, comprising a first object (10) fixed relative to a frame of the device; a second object (20) mounted in spaced relation to the first object (10) and adapted for movement relative thereto; and at least one measuring cell for determining movement or displacement of the second object (20) relative to the first object (10). The present invention provides a resilient member (50) arranged between the first object (10) and the second object (20) for dampening relative movements, wherein the resilient member substantially surrounds the at least one measuring cell.

## Description

### FIELD OF THE INVENTION

The present invention relates to an optoelectronic device for determining relative movements or relative positions of two objects. The invention also relates to a force and/or torque sensor incorporating such an optoelectronic device.

### BACKGROUND OF THE INVENTION

For the computer user, it is becoming increasingly important to be able to control and implement two-dimensional and three-dimensional movements or displacements in the computer environment. This is typically achieved using a computer peripheral device. The two- or three-dimensional displacements are detected by the peripheral device and described as a translation (X, Y, Z) and/or a rotation (A, B, C) in space. Furthermore, such displacements may be used to determine a corresponding applied force and/or torque.

Recently developed computer peripheral devices of the above-described type, particularly for the office sector and the entertainment electronics sector, utilize optoelectronic devices to detect and describe displacements in two- or three-dimensional space. Here they function as an input device with which manipulations in up to six degrees-of-freedom can be input, in contrast to a joystick, a mouse or a trackball, which in general only allow input in two degrees-of-freedom. The simple, convenient input of up to six components, as allowed by a force and/or torque sensor comprising an optoelectronic device, is particularly desirable to control 3D design software and sophisticated computer games.

To this end, the optoelectronic device will typically include one or more measuring cell comprising a position-sensitive detector illuminated by a light-emitting element, such as a light-emitting diode (LED), for measuring displacements in multiple (i.e. up to six) degrees-of-freedom. Examples of such devices are known from United States Patent Application Publication No. 2003/102422 A1 and United States Patent Application Publication No. 2003/103217 A1, and more recently from the co-pending European Patent Application No. 06 007 195.8 and the co-pending International Application Nos. PCT/EP2007/003146 and PCT/EP2007/003149.

Thus, starting from the above prior art, the present invention is based on the object of creating an improved design of the device compared with known arrangements. That is, the device should be simpler to assemble, more durable and should provide even more reliable operation. This design may then be implemented in the creation of an input device for use in the office or entertainment sectors or a force/torque sensor which allows uncomplicated input in up to six degrees-of-freedom.

### SUMMARY OF THE INVENTION

To achieve the above object, the invention provides an optoelectronic device as defined in claim 1 or claim 4 and a resilient member for use in such an optoelectronic device as defined in claim 14. The invention also provides a force and/or torque sensor which incorporates such an optoelectronic device. Preferably, the force sensor is used as a pan/zoom sensor for image processing and other similar office applications. The device of the invention could be incorporated in a keyboard for a personal computer.

### STRUCTURE AND FURTHER DEVELOPMENT OF THE INVENTION

According to one aspect, the present invention provides an optoelectronic device for determining relative movements or relative positions of two objects, comprising a resilient member arranged between said two objects, wherein the resilient member has a generally hollow structure which partially encloses the device. The device typically includes a first object fixed relative to a frame of the device and a second object mounted in spaced relation to the first object and adapted for movement relative thereto. The resilient member is arranged between the first object and the second object and defines a space which encloses at least part of the device. For example, the resilient member may enclose or surround one or more measuring cell of the optoelectronic device.

Thus, according to another aspect, the present invention provides an optoelectronic device for determining relative movements or relative positions of two objects, comprising:
a first object fixed relative to a frame of the device;
a second object mounted in spaced relation to the first object and adapted for movement relative thereto;
at least one measuring cell for determining movement or displacement of the second object relative to the first object; and
a resilient member arranged between the first object and the second object, wherein the resilient member substantially surrounds the at least one measuring cell.

As briefly mentioned above, each measuring cell typically comprises a light-emitting element and a detector which is illuminated by and detects light from the light-emitting element. The light-emitting elements are preferably light-emitting diodes (LEDs), and more preferably, infra-red light-emitting diodes (ILEDs). The detectors are preferably position-sensitive detectors (PSDs), and more preferably, position-sensitive infra-red detectors (PSIDs). The optoelectronic device may include two or more measuring cells, and preferably has from three to six measuring cells.

According to a further aspect, the present invention provides a resilient member for an optoelectronic device for determining relative movements or relative positions of two objects. The resilient member has a generally hollow structure and is adapted to at least partially surround or enclose the optoelectronic device. In particular, the resilient member is adapted to surround one or more measuring cell of the device.

In a preferred form of the invention, the resilient member has a generally hollow structure, which defines a space for enclosing part of the optoelectronic device, such as the electronic components of one or more measuring cell. More preferably, the resilient member has a generally tubular or cylindrical structure, such as a circular cylindrical structure. Thus, this cylindrical structure of the resilient member may form a housing or enclosure for at least part of the optoelectronic device.

In a preferred form of the invention, the hollow structure of the resilient member comprises one or more deformable wall portion. Thus, a wall portion of the resilient member which extends around or encloses part of the optoelectronic device (e.g. one or more measuring cells of the device) is adapted to deform when the second object moves relative to the first object. The member is resilient in the sense that it will typically return to its original form after experiencing such a deformation within the normal parameters or scope of use.

In a preferred form of the invention, the deformable wall of the resilient member has a substantially uniform or constant profile. In an alternative preferred form of the invention, however, the wall portion(s) of the resilient member may have a shaped or non-uniform profile, such as a ribbed or corrugated profile. In this context, the term "profile" may be understood as a reference to a cross-section of the wall. The shaped (e.g. ribbed or corrugated) profile preferably provides the wall of the resilient member with enhanced flexibility, enhanced deformability and/or enhanced resilience for a given wall thickness or a given wall material.

In a preferred form of the invention, the resilient member comprises an elastomer material (e.g. natural rubber or synthetic rubber) or another material with dampening properties. The resilent member is therefore preferably adapted to form a damper for dampening movement in the optoelectronic device. That is, the resilient member may be adapted to dampen (i.e. to dissipate, retard or suppress) oscillatory or vibratory movements of the second object relative to the first object. In this regard, as will be explained in more detail below, the second object is preferably elastically mounted relative to the first object of the optoelectronic device by spring means, such as coil springs. The resilient member of the invention may thus be designed to reduce or retard the degree of oscillation or vibration caused by the spring mounting means.

Thus, according to a further aspect, the present invention provides a damper for an optoelectronic device that determines relative movements or relative positions of two objects, the damper comprising a hollow member adapted to be arranged between said two objects for dampening relative movements of said objects, wherein the hollow member defines a space which encloses part of the device. The damper is desirably a resilient member, to the extent that it is at least partially formed of a resilient material. As noted above, the optoelectronic device typically includes a first object fixed relative to a frame of the device and a second object mounted in spaced relation to the first object and adapted for movement relative thereto, and the resilient damper member is designed to be arranged between the first object and the second object.

In a preferred form of the invention, the resilient member has a mounting portion designed for attaching the resilient member to one of the first object, the frame, or the second object of the optoelectronic device. The mounting portion is preferably formed at an end or an edge region of the resilient member; e.g. at an edge region or rim of the generally cylindrical structure. This mounting portion furthermore preferably includes means for locating or positioning the resilient member relative to the first object, the frame, or the second object to which it is directly attached. The locating means may be in the form of one or more projection or recess, which may be designed to align and/or engage with a complementary recess or projection.

In a preferred form of the invention, the resilient member is adapted to be attached or firmly secured to the first object and/or to the frame of the optoelectronic device. In such a case, the resilient member need not be firmly secured to the second object but is preferably located adjacent to, and/or in contact with, the second object. In an alternative preferred form of the invention, the resilient member is attached or firmly secured to the second object and is preferably located adjacent to, and/or in contact with, the first object. In yet another form of the invention, the resilient member may be attached to both of the first and second objects. In each case, when the second object is moved relative to the first object and/or relative to the frame of the device, movement of the second object preferably also causes a movement, displacement and/or deformation of the resilient member.

In a preferred form of the invention, the resilient member is non-transparent, and preferably substantially opaque, and is adapted to shroud part of the optoelectronic device (e.g. one or more of the measuring cells). In this way, the resilient member may shield or protect the components of the measuring cells, and in particular the PSDs or PSIDs, from the possibility of extraneous light infiltrating the device from the outside. By forming a shroud around the measuring cells, the resilient member is preferably also designed to form a protective seal or enclosure against the ingress of dirt or dust to the sensitive electronic components of the device.

In a preferred form of the optoelectronic device of the invention, each measuring cell further includes a slit diaphragm arranged in the light path between the position-sensitive detector and the light-emitting element. At least one of the detector, the light-emitting element and the slit diaphragm of each measuring cell is associated with the first object and is fixed relative to the frame of the device, and at least one other of the detector, the light-emitting element and the slit diaphragm of each measuring cell is associated with the second object and is movable therewith. A slit direction of the or each slit diaphragm may be aligned substantially transverse, e.g. essentially perpendicularly, to a light-sensitive part or axis of the position-sensitive detector. A plane of the light shining through at least one of the slit diaphragms and incident upon the detector may form an angle of less than 90° (e.g. an acute angle) with a plane of the light-sensitive part of the detector.

In a preferred form of the optoelectronic device, each position-sensitive detector is illuminated by more than one light-emitting element (e.g. two) to form multiple (e.g. two) measuring cells with a common detector. In such a case, the position-sensitive detector is illuminated alternately (e.g. periodically) by each of the light-emitting elements. A measurement value of the detector is then read out simultaneously with its illumination. In other words, the detector of each measuring cell is illuminated by only one light-emitting element at any particular time, and the measurement value of the detector is designed to be read out simultaneously therewith. Typically, the measuring cells having a common position-sensitive detector are arranged such that the beam paths which emanate from the light-emitting elements intersect and illuminate substantially the same portion of the common detector; for example, in the plane of their intersection.

In a preferred form of the optoelectronic device of the invention, the first object and the second object each comprises a substantially flat or plate-like member, which is preferably substantially rigid. The second object may thus be mounted in the device such that it is parallel to and spaced from the first object, which, in turn, is rigidly fixed to the frame of the device. Accordingly, in a neutral or non-deflected position, the second object is arranged substantially parallel to the first object. The plane of the first object may therefore be considered to form a reference plane for the device.

In a preferred form of the optoelectronic device of the invention, the second object is elastically mounted relative to the first object and is biased to a neutral position. In this respect, the optoelectronic device includes elastic mounting means which biases the second object to return to the neutral position after it has been moved or displaced. The elastic mounting means preferably includes spring means, and may include one or more coil spring or any other suitable elastic component.

The 3D input devices for a computer environment produced using an optoelectronic device according to the invention can be equated to a force and/or torque sensor. The translatory movements (X, Y, Z) correspond to the forces (Fₓ, F_{y}, F_{z}), and the rotational movements (A, B, C) correspond to the moments (Mₓ, M_{y}, M_{z}). A pan/zoom type sensor typically corresponds to a force sensor (Fₓ, F_{y}, F_{z}), since such a pan/zoom sensor may capture only translatory movements (X, Y, Z).

The above description of the present invention will be more fully understood from the following detailed description of particular embodiments of the invention, which is made by way of example with reference to the accompanying drawings.

### BRIEF DESCRIPTION OF DRAWINGS

Embodiments of the invention are illustrated in the following drawings figures, in which like features are indicated with like reference symbols, and in which:
- Fig. 1: shows an exploded perspective view of an optoelectronic device according to an embodiment of the present invention;
- Fig. 2: is an assembled perspective view of the optoelectronic device of Fig. 1 without the resilient enclosure member;
- Fig. 3: is an assembled perspective view of the optoelectronic device of Fig. 1 with the resilient member; and
- Fig. 4: is an inverted perspective view of the optoelectronic device of Fig. 1.

### DETAILED DESCRIPTION OF THE EMBODIMENTS

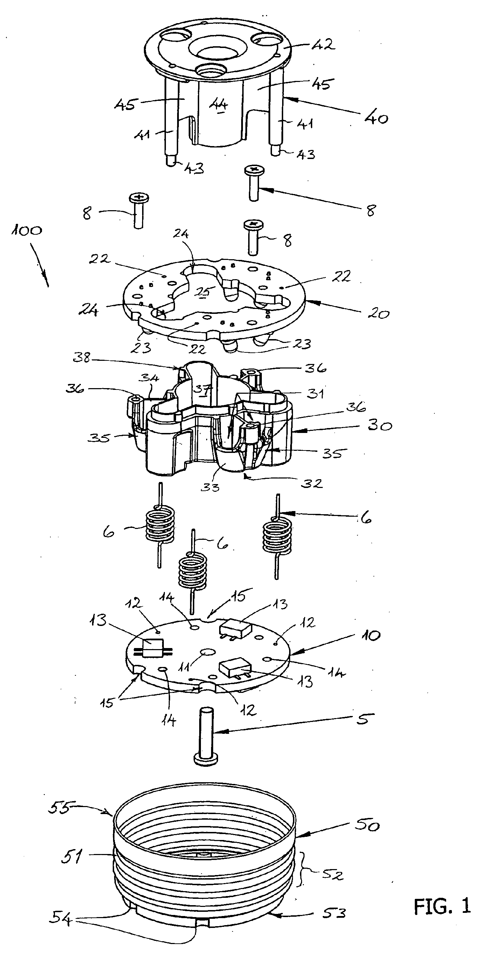

With reference to Fig. 1 of the drawings, the core components of an optoelectronic device 100 according to the present invention are illustrated. In this instance, the optoelectronic device of the invention is designed to be employed in a force/torque sensor which functions as an input device to allow uncomplicated and user-friendly motion input in up to six degrees-of-freedom in a 3D computer environment.

The optoelectronic device 100 of the invention corresponds in its basic structure and operation to the device described in the co-pending European Patent Application No. 06 007 195.8 and co-pending International Patent Applications PCT/EP2007/003146 and PCT/EP2007/003149. The optoelectronic device 100 includes a frame or base (not shown in this case) which typically remains stationary on a desktop or bench during use, and a knob-like cap (also not shown in this case) which is movably mounted on the base and forms the input means with which a user may input movements to be detected and interpreted by the device. The cap of the device is designed to be grasped by the user and manipulated in six degrees-of-freedom relative to the base to generate the desired user input. The device 100 is thus designed to detect and ascertain or determine the movements or displacements of the cap relative to the base. Reference may be made to the above-mentioned co-pending European and International patent applications for an additional appreciation of the general structure and operation of the optoelectronic device.

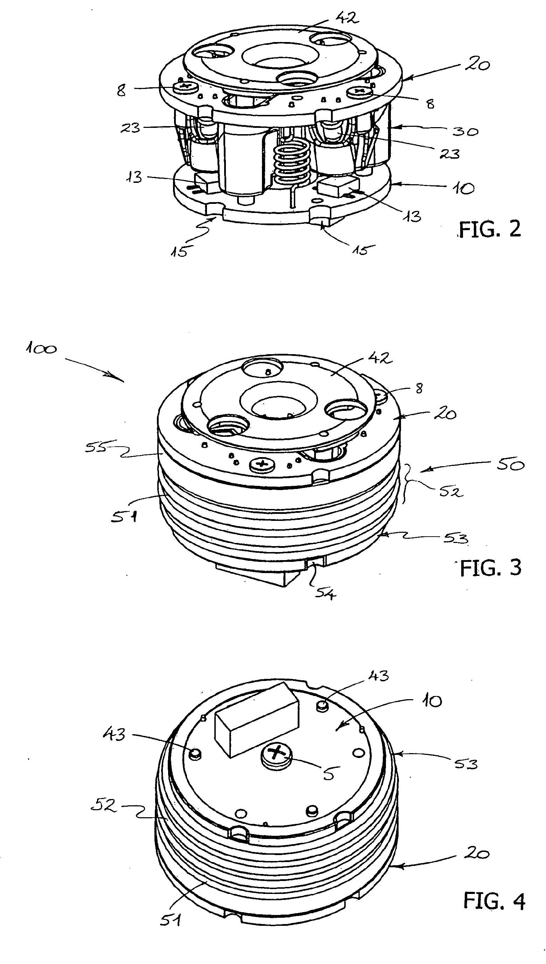

With reference to Figs. 1 and 2 of the drawings, in order to determine the movement or position of the cap relative to the base, the optoelectronic device 100 includes a first board member 10 which is rigidly connected to the frame or base of the device by means of, for example, a central mounting screw 5 inserted through a mounting hole formed in the base and a corresponding central screw-hole 11 formed in the first board 10. The optoelectronic device 100 further includes a second board member 20, which is rigidly fixed within the knob-like cap (not shown). For example, an outer periphery of the second board member 20 may be fixed in abutment with a shoulder on an inner surface of the cap using an adhesive cement, as is shown in the co-pending European Patent Application No. 06 007 195.8.

The first and second board members 10, 20 are substantially rigid and generally circular plate-like members which preferably comprise a printed-circuit substrate and preferably also carry at least some of the electronic components of the optoelectronic measuring cells, as known for example from US 2003/102422 and US 2003/103217 referenced above. In the further description, the first and second board members 10, 20 will be referred to as the first board 10 and the second board 20, respectively.

The second board 20 is elastically connected to the first board 10 and is adapted for movement or displacement relative thereto. That is, the second board 20 is elastically connected in spaced, substantially parallel relation to the first board 10 by three helical or coil spring elements 6 which are approximately equally spaced apart from one another. A lower end of each of the spring elements 6 is received and fixed (preferably by soldering) within a corresponding mounting hole 12 formed in the first board 10. Similarly, an upper end of each of the spring elements 6 is received and fixed (again, preferably by soldering) within a corresponding mounting hole 22 formed in the second board 20. In this way, the substantially circular second board 20 is mounted in a neutral position (as shown in Fig. 2) spaced directly above and essentially parallel to the substantially circular first board 10, such that the second board 20 is elastically biased to the neutral position by the spring elements 6. In this regard, the springs 6 act to return the second board 20 to the neutral position when it is moved or displaced relative to the first board 10.

As will be described in more detail below, the optoelectronic device 100 of the invention includes a plurality of optoelectronic measuring cells for determining relative movements or displacements between the first and second boards 10, 20. Thus, the movement or position of the cap (not shown) relative to the base or frame of the device (not shown) is determined by detecting and ascertaining or measuring relative movements and/or positions of the second board 20 relative to the first board 10. Accordingly, the two 'objects' for which the optoelectronic device 100 of the invention determines relative movements or positions may be understood as being the first board 10 and the second board 20. Nevertheless, relative movements or positions of those two objects also correspond to the relative movements or positions of the base and the cap to which the first board 10 and the second board 20 are respectively rigidly connected.

Still referring to Figs. 1 and 2 of the drawings, each of the measuring cells for determining the relative movements and/or positions of the first and second boards 10, 20 comprises a light emitting element in the form of an infrared light-emitting diode (ILED) 23 mounted to and projecting from an underside of the second board 20 and a position-sensitive infrared detector (PSID) 13 mounted on an upper side of the first board 10, facing the second board 20. Thus, in this embodiment, the PSIDs 13 mounted on the first board 10 are fixed relative to the base of the device 100 and the ILEDs 23 mounted on the second board 20 are adapted for movement relative to the PSIDs 13 as the second board 20 is moved via the cap (not shown). In this embodiment, there are six ILEDs 23 provided on the second board 20 and three PSIDs 13 on the first board 10, such that each PSID 13 is designed to be illuminated by two separate ILEDs 23. Each PSID 13 is thereby designed to form a part of two separate measuring cells.

Furthermore, as will be particularly apparent from Fig 1 and Fig. 2, a light shield 30 is provided between the first board 10 and the second board 20 for guiding light emitted from the ILEDs 23 to each respective associated PSID 13. The light shield 30 has a roughly triangular configuration and includes pairs of individual light-path channels 31 formed at each of the three side regions of that triangular configuration. The light-path channels 31 are formed in separate or discrete compartments 35 attached at the sides of the integral light shield component 30, with each of the compartments 35 having a pod-like structure.

Wall portions 33 of each compartment 35 of the light shield 30 surround and enclose a pair of individual channels 31 which are separated from each other by a central dividing wall portion 34. Thus, each compartment 35 defines a pair of light-path channels 31 which extend downwardly from the second board 20 towards the first board 10 for directing or guiding light from the respective ILEDs 23 to a PSID 13. As can be more clearly seen in Fig. 2, each channel 31 is associated with and partially accommodates one of the ILEDs 23. As the ILEDs 23 have relatively focused light beams, a full enclosure or full housing of each ILED 23 within the light shield 30 is not essential. The light paths defined by the pair of channels 31 for the ILEDs 23 which illuminate a common PSID 13 (i.e. the channels 31 in each of the pod-like compartments 35 in this case) converge towards one another in the direction from the ILEDs 23 towards the associated PSID 13.

Thus, the light shield 30 defines a number of individual light-path channels 31 between each ILED 23 on the second board 20 and its respective PSID 13 mounted on the first board 10 below. Furthermore, although not actually visible in the views of the light shield 30 shown, the wall portions of the light shield on an underside of each of the pod-like compartments 35 incorporate a slit diaphragm 32 above each of the PSIDs 13, such that each of the slit diaphragms 32 is arranged in the light-path between one ILED 23 and the respective PSID 13 which that ILED is intended to illuminate. The slit direction of each slit diaphragm 32 is substantially transverse, and preferably perpendicular, to a light-sensitive part or axis of the associated PSID 13. The wall portions 33 of the light shield 30 are non-transparent, i.e. typically opaque, to exclude unwanted or extraneous light from the PSIDs 13 and thereby ensure that only light transmitted through the slit diaphragms 32 falls upon the detectors.

In this embodiment, the light shield component 30 is designed to be securely fixed to, and thus suspended from, the movable second board 20 for movement therewith relative to the first board 10. To this end, Figs. 1 and 2 show the provision of screw holes 36 formed adjacent the dividing wall portion 34 in the pod-like compartments 35 for fastening the light shield 30 to the second board 20 with screws 8. Thus, the PSIDs 13 of the optoelectronic device 100 fixed on the first board 10 detect movements and positions of the second board 20 by detecting light transmitted from the movable ILEDs 23 which illuminates the PSIDs 13 via the slit diaphragms 32 formed in the underside of the pod-like structures 35.

The light shield component 30 incorporates a central space or cavity 37 which is designed to receive a stop arrangement 40 to be described below. Furthermore, the second board 20 has a large continuous opening 25 for accommodating the stop arrangement 40. An upper edge region of the light shield 30 may be shaped to match the opening 25 formed in the second board 20 to facilitate positioning and mounting of the light shield. In this regard, as can be seen in Fig. 1, an upper edge region of the light shield 30 has an upstanding rim 38, the outer profile of which is designed to match the shape of the opening 25 formed in the second board 20. Thus, the rim 38 can be fittingly received within the opening 38 when the light shield component 30 is attached to the second board 20. The space or cavity 37 in the light shield 30 has a generally circular central region for receiving a mounting part of the stop 40 and lobes which extend radially there-from for respectively receiving elongate stop members 41 of the stop arrangement 40.

Referring again to Fig. 1 and Fig. 2 of the darwings, the optoelectronic device 100 includes a stop arrangement 40 which is designed to provide a physical barrier to movement or displacement of the second board 20 relative to the first board 10 beyond a specific predetermined limit. The stop arrangement 40 thereby prevents any inadvertent overloading of the device 100 during use. In this regard, the stop arrangement 40 comprises three generally elongate stop members 41 in the form of cylindrical studs or pins which are interconnected with one another at an upper end region thereof via a plate-like connecting member 42. The three pin members 41 are generally equally spaced apart from one another and extend substantially parallel from one side of the plate member 42. The pin members 41 extend downwardly from the plate member 42 through the lobe-like openings 24, which are part of a larger continuous opening 25 in the second board 20, towards the first board 10. Projections 43 at a lower end of each of the pin members 41 are received within locating holes 14 formed in the first board 10.

The stop 40 further comprises a central mounting part 44 in the form of an elongate cylindrical member which is designed to be fixed relative to the frame of the optoelectronic device at a lower end thereof. For this purpose, the large screw fastener 5, which passes through the central screw hole 11 formed in the first board 10, is adapted to engage a correspondingly threaded bore (not shown) in the central mounting part 44. This is the same screw fastener 5 which also rigidly secures the first board 10 to the base or frame of the optoelectronic device 100.

The cylindrical mounting part 44 is also rigidly connected with an upper end region of each of the stop members 41 via the plate member 42. Furthermore, a connection between the stop members 41 and the mounting part 44 is also effected by web elements 45 which extend radially outward from the central mounting part 44 towards the stop members. Such radial webs or rib elements 45 enhance the rigidity of the stop arrangement 40 and in particular serve to stabilize the elongate stop members 41. The thickness and/or length of the web elements 45 can be selected according to the degree of rigidity required. Thus, the stop arrangement 40 has a generally robust and rigid structure for defining a solid limit to movement of the second board 20 relative to the first board 10. Although the pin members 41, the plate member 42 and the mounting part 44 could conceivably be separately formed and pre-assembled as a sub-assembly of the device 100, the stop 40 is more preferably formed as a rigid unitary component, e.g. by injection molding using a relatively high-density polymer-plastics material.

As is apparent from Figs. 1 to 3 of the drawings, the lobe-like openings 24 formed through the second board 20 have a diameter substantially larger than the diameter of the pin members 41 they receive. In the neutral position of the second board 20 relative to the first board 10, each of the pin members 41 is positioned substantially centrally in its respective opening 24 through the second board. By virtue of the elastic deformability of the three spring elements 6 connecting the first and second boards 10, 20, the second board 20 is able to move laterally and rotationally in a plane parallel to the first board 10 within the limits defined by the holes 24 (or the upper rim 38 of the light shield received therein) and the sides of the pin members 41. Furthermore, the second board 20 is also able to move up and down and/or rotationally in the vertical direction, within limits defined by the plate-like connecting member 42. Thus, movement of the second board 20 is possible in six-degrees of freedom relative to the first board 10 within limits defined by the stop 40. For a more detailed explanation of these movements and the operation of the stop 40, reference may be made to the co-pending European Patent Application No. 06 007 195.8 and the International Application Nos. PCT/EP2007/003146 and PCT/EP2007/003149.

In those cases, the optoelectronic device 100 was provided with elastomeric foam blocks to complement and dampen the action of the stop 40. Similarly, in the earlier case US 2003/0102422 A1, elastomer columns acted as both spring and damping means for interconnecting the first and second boards. The present invention, on the other hand, provides a significant improvement over those arrangements with a resilient member 50, as illustrated in the drawings.

The resilient member 50 has a generally hollow cylindrical configuration and substantially surrounds and encloses the optoelectronic measuring cells formed by the ILEDs 23 and the PSIDs 13. That is, the resilient member 50 defines a central cavity or space which accommodates or encloses the components of measuring cells of the optoelectronic device 100. The resilient member 50 is typically formed from an elastomer material, such as a synthetic rubber or natural rubber, and has a wall structure 51 which extends around the ILEDs 23 and the PSIDs 13 of the device 100 between the first board 10 to the second board 20, such that the resilient member substantially completely encloses the space between the two boards. This is particularly evident from Figs. 3 and 4 of the drawings.

The cylindrical wall structure 51 of the resilient member 50 includes a plurality of integrally formed ribs or corrugations 52 which extend around the circumference of the cylindrical form. These ribs or corrugations 52 tend to provide a concertina-type structure, or a pleated or bellows-like formation in the wall 51 of the resilient member, and thereby provide greater flexibility and greater resilience for a given elastomer material and a given wall thickness.

In this connection, it will be appreciated that the resilient member 50 may comprise any number of different polymer plastic or rubber materials. Importantly, however, the material should desirably exhibit dampening properties for dampening or reducing elastic oscillations of the spring elements 6. In particular, as the cap (not shown) of the device is moved by an user, thereby moving the second board 20 relative to the first board 10, the spring elements 6 are deformed. When the user then releases the cap, the spring elements 6 act to return the second board 20 towards the neutral position. However, the spring elements 6 generate on-going oscillations or vibrations which dissipate only slowly. Thus, the resilient member 50 is particularly designed to dampen such vibrations so that the optoelectronic device more quickly returns to the stationary neutral position.

As can be clearly seen in Fig. 1, a lower end region 53 of the resilient member 50 includes a plurality of curved, radially inwardly oriented projections 54 which are designed to register or locate with corresponding recesses 16 formed in the peripheral edge of the first board 10. Thus, the edge region 53 is designed for mounting the resilient member 50 relative to the first board 10 by the interaction of the projections 54 and the recesses 15 such that they are at least rotationally fixed relative to one another. The edge region 53 may also be, e.g. adhesively, fixed to the first board 10 so that it may not move at all relative to the first board 10. As will be appreciated, however, the cylindrical wall 51 of the resilient member 50 is flexible and resiliently deformable in essentially all directions. The corrugated profile of the wall 51 particularly enhances extension or contraction in the vertical direction (i.e. in the direction of the central axis of the cylindrical form), but may also facilitate deformation in a transverse plane. The wall 51 of the resilient member 50 is typically relatively thin, such that a ratio of wall thickness to outer diameter for the resilient member 50 is less than or equal to 0.1, and preferably between 0.1 and 0.01. That ratio may even be less than or equal to 0.01.

As noted above and as is shown in Fig. 3 and Fig. 4 of the drawings, the resilient member 50 substantially completely traverses the gap between the first board 10 and the second board 20 in the neutral position. Thus, an upper edge region 55 of the resilient member 50 is directly adjacent and preferably in contact with the second board 20 in the neutral position, although it need not be secured thereto. With the appropriate material selection (e.g. highly flexible and highly yieldable), it would be possible to have the resilient member 50 attached at both of the lower and upper edge regions 53, 55 to the first and second boards 10, 20, respectively. In this respect, it is important that the flexibility and movability of the second board relative to the first board be not excessively hindered by the resilient member 50. However, it has been found that good results in dampening the oscillations or vibrations of the spring elements 6 can be achieved simply by designing the dimensions of the resilient member 50 so that the upper edge region 55 is in abutment with, but not securely fixed to, the second board 20. In this way, contact or frictional interference between the upper edge region 55 of the resilient member 50 and the second board 20 imparts a dampening action to the movement of the second board 20 when an operator moves and releases the cap, causing the optoelectronic device 100 to more quickly return to a stationary neutral position.

Furthermore, by forming the resilient member 50 from a non-transparent, opaque material, the resilient member 50 also forms a shroud which excludes external light from the optoelectronic measuring cells. That is, the resilient member 50 at least partially shrouds the optoelectronic device 100, preventing outside light from infiltrating the measuring cells and from possibly negatively influencing the detection or determination of relative movements or positions of the two objects by the measuring cells. This shroud like enclosure provided by the resilient member 50 also prevents the ingress of dust and/or grit into the device, which could otherwise also compromise the performance of the measuring cells over time.

## Claims

1. An optoelectronic device (100) for determining relative movements or relative positions of two objects, comprising a resilient member (50) arranged between said two objects, wherein the resilient member (50) has a generally hollow structure which partially encloses the device.

2. An optoelectronic device (100) according to claim 1, comprising a first object (10) fixed relative to a frame of the device, and a second object (20) mounted in spaced relation to the first object (10) and adapted for movement relative thereto; wherein the resilient member (50) is adapted to dampen movements of the second object (20) relative to the first object (10).

3. An optoelectronic device (100) according to claim 1, wherein the resilient member (50) encloses an optoelectronic measuring cell for determining movement or displacement of the second object (20) relative to the first object (10) in the device.

4. An optoelectronic device (100) for determining relative movements or relative positions of two objects, comprising:
a first object (10) fixed relative to a frame of the device;
a second object (20) mounted in spaced relation to the first object (10) and adapted for movement relative thereto;
at least one measuring cell for determining movement or displacement of the second object (20) relative to the first object (10); and
a resilient member (50) arranged between the first object (10) and the second object (20), wherein the resilient member substantially surrounds the at least one measuring cell.

5. An optoelectronic device (100) according to claim 4, wherein the resilient member (50) has a generally hollow structure, and preferably a tubular structure.

6. An optoelectronic device (100) according to any one of claims 1 to 5, wherein the resilient member (50) is directly attached to the first object (10), the frame of the device, or to the second object (20).

7. An optoelectronic device (100) according to any one of claims 1 to 6, wherein the resilient member (50) has a generally cylindrical structure.

8. An optoelectronic device (100) according to claim 7, wherein the wall of the resilient member has non-uniform profile, preferably a ribbed or corrugated profile.

9. An optoelectronic device (100) according to any one of claims 1 to 8, wherein a wall of the resilient member is adapted to deform when the second object (20) moves relative to the first object (10).

10. An optoelectronic device (100) according to any one of claims 1 to 9, wherein the resilient member comprises an elastomer material and is adapted to dampen movement of the second object (20) relative to the first object.

11. An optoelectronic device (100) according to any one of claims 1 to 10, wherein the resilient member is substantially opaque such that it at least partially shrouds the measuring cell of the device.

12. A force and/or torque sensor incorporating an optoelectronic device (100) according to any one of claims 1 to 11.

13. A keyboard for a personal computer incorporating an optoelectronic device (100) according to any one of claims 1 to 11.

14. A resilient member (50) for an optoelectronic device (100) for determining relative movements or relative positions of two objects, wherein the resilient member has a generally hollow structure and is adapted to substantially surround part of the device, and preferably at least one measuring cell of the device.

15. A resilient member (50) according to claim 14, wherein the resilient member (50) has a generally cylindrical structure, preferably a circular cylindrical structure.

16. A resilient member (50) according to claim 14 or 15, wherein the hollow structure of the resilient member comprises a deformable wall.

17. A resilient member (50) according to claim 16, wherein the wall of the resilient member has a ribbed or corrugated profile.

18. A resilient member (50) according to any one of claims 14 to 17, wherein the resilient member comprises a rubber or elastomeric material and is adapted to dampen movements in the optoelectronic device.

19. A resilient member (50) according to any one of claims 14 to 18, wherein the resilient member is substantially opaque such that it is adapted to shroud one or more measuring cells of the optoelectronic device.

20. A damper (50) for an optoelectronic device (100) for determining relative movements or relative positions of two objects (10, 20), the damper (50) comprising a hollow member adapted to be arranged between said two objects (10, 20) for dampening relative movements of said objects, wherein the hollow member defines a space which encloses part of the device.

## Amended claims

### Amended claims in accordance with Rule 137(2) EPC.

**1.** An optoelectronic device (100) for determining relative movements or relative positions of a first (10) and a second (20) object, comprising a resilient member (50) arranged between the first (10) and the second (20) object, wherein the resilient member (50) has a generally hollow structure which partially encloses the device and is adapted to dampen movements of the second object (20) relative to the first object (10).

**2.** An optoelectronic device (100) according to claim 1, wherein the first object (10) is fixed relative to a frame of the device, and the second object (20) is mounted in spaced relation to the first object (10) and adapted for movement relative thereto.

**3.** An optoelectronic device (100) according to claim 1, comprising at least one measuring cell for determining movement or displacement of the second object (20) relative to the first object (10); and

**4.** An optoelectronic device (100) according to claim 1, wherein the resilient member (50) arranged between the first object (10) and the second object (20) substantially surrounds the at least one measuring cell.

**5.** An optoelectronic device (100) according to claim 1, wherein the resilient member (50) has a tubular structure.

**6.** An optoelectronic device (100) according to any one of claims 1 to 5, wherein the resilient member (50) is directly attached to the first object (10), the frame of the device, or to the second object (20).

**7.** An optoelectronic device (100) according to any one of claims 1 to 6, wherein the resilient member (50) has a generally cylindrical structure, preferably a circular cylindrical structure.

**8.** An optoelectronic device (100) according to claim 7, wherein the wall of the resilient member has non-uniform profile, preferably a ribbed or corrugated profile.

**9.** An optoelectronic device (100) according to any one of claims 1 to 8, wherein a wall of the resilient member is adapted to deform when the second object (20) moves relative to the first object (10).

**10.** An optoelectronic device (100) according to any one of claims 1 to 9, wherein the resilient member comprises a rubber or elastomer material.

**11.** An optoelectronic device (100) according to any one of claims 1 to 10, wherein the resilient member is substantially opaque such that it at least partially shrouds the measuring cell of the device.

**12.** An optoelectronic device (100) according to any one of claims 1 to 11, wherein the hollow structure of the resilient member comprises a deformable wall.

**13.** A force and/or torque sensor incorporating an optoelectronic device (100) according to any one of claims 1 to 12.

**14.** A keyboard for a personal computer incorporating an optoelectronic device (100) according to any one of claims 1 to 13.

**15.** A resilient member (50) of an optoelectronic device (100) according to any one of claims 1 to 12.
